# FASCICULE DE BREVET EUROPEEN

(11) **EP 1 968 834 B1**
(45) Date de publication et mention de la délivrance du brevet: **17.02.2010**
(21) Numéro de dépôt: 05850059.6
(22) Date de dépôt: 29.12.2005
(51) Int. Cl.: B60T 13/66, B60T 13/68

(54) **DISPOSITIF DE FREINAGE NOTAMMENT POUR UN VEHICULE INDUSTRIEL**
BREMSVORRICHTUNG, INSBESONDERE FÜR NUTZFAHRZEUG
BRAKING DEVICE ESPECIALLY FOR A COMMERCIAL VEHICLE

(43) Date de publication de la demande: 17.09.2008
(73) Titulaire: RENAULT TRUCKS, 69800 St Priest (FR)
(72) Inventeur: ROLLIN, Christian, F-38460 Saint Romain de Jalionas (FR)
(74) Mandataire: Putet, Gilles
(86) Numéro de dépôt international: PCT/FR2005/003305
(87) Numéro de publication internationale: WO 2007/074219

(56) Documents cités:
- GB-A- 2 201 207
- PATENT ABSTRACTS OF JAPAN vol. 2000, no. 09, 13 octobre 2000 (2000-10-13) & JP 2000 159092 A (MITSUBISHI MOTORS CORP), 13 juin 2000 (2000-06-13)

## Description

### Domaine de l'invention

L'invention concerne un dispositif de freinage de service et de parcage d'un véhicule plus spécialement d'un véhicule industriel équipé d'une suspension pneumatique réglable en hauteur.

### Arrière plan technologique

Dans le domaine des véhicules industriels servant au transport de marchandise, il est connu d'équiper le ou les essieux arrière du véhicule d'une suspension intégrant des coussins d'air. Ces coussins d'air, grâce à un asservissement pneumatique, permettent de régler la hauteur du châssis par rapport au sol.

Cette disposition s'avère extrêmement utile dans au moins deux cas.

En effet, cela permet à un véhicule tracteur de venir accrocher des remorques ou semi remorques dont les organes d'attelage sont à des hauteurs différentes et cela permet également, dans le cas d'un véhicule destiné à embarquer un conteneur, de régler la hauteur du châssis en fonction de la hauteur à laquelle le conteneur est positionné.

Cette disposition permet également d'ajuster la hauteur du plateau pour venir accoster contre un quai d'embarquement/ débarquement.

Un problème spécifique, qu'il faut mentionner concernant les véhicules équipés d'une suspension pneumatique, est que, lorsqu'il est demandé un déplacement vertical du châssis obtenu par une modification de la pression pneumatique des coussins d'air, ce déplacement peut induire une translation du châssis.

A cause de la géométrie de la suspension arrière, le fait de demander une élévation du châssis induit généralement un déplacement vers l'arrière du châssis.

Ce déplacement est, bien entendu, extrêmement gênant puisqu'il est la cause de nombreuses collisions entre la caisse du véhicule avec, par exemple, un quai ou un objet situé à proximité de la partie arrière du véhicule en question.

Il apparaît, donc, que des améliorations sont souhaitables dans la prise en compte des mouvements de suspensions notamment d'un véhicule à suspension pneumatiquement réglable, voir par exemple JP 2000 159092 A.

### Résumé de l'invention

L'invention concerne un dispositif de freinage notamment pour un véhicule industriel. Ce dispositif comprend notamment un système fluidique de freinage de service avant présentant un circuit de freinage avant agissant sur au moins un actionneur de freinage piloté par un circuit de commande et un système fluidique de freinage de parcage ayant un circuit de freinage de parcage agissant sur au moins un actionneur de freinage arrière de parcage piloté par un circuit de commande pouvant placer le véhicule dans une premier mode de parcage dans lequel des roues arrière du véhicule sont bloquées; le dispositif comprend, en outre, des moyens de dérivation du fluide sous pression du circuit de commande du système de parcage vers circuit de commande du circuit de freinage avant permettant de faire passer le véhicule d'un premier mode de freinage de parcage dans lequel les actionneurs de freinage arrière sont activés à un second mode de freinage de parcage dans lequel les actionneurs de freinage arrière sont désactivés et les actionneurs de freinage avant sont activés.

L'invention permet, donc, de créer deux modes de parcage qui assurent chacun une immobilisation du véhicule ; le premier mode de parcage agit sur les actionneurs de freinage arrière et, donc, sur les roues arrière tandis que le second mode de parcage agit sur les actionneurs de freinage avant et donc sur les roues avant tout en désactivant les actionneurs de freinage arrière laissant libres les roues arrière. Ce deuxième mode de freinage permet alors d'agir sur le réglage d'une suspension arrière d'un véhicule sans que le dit véhicule ne connaisse de déplacement longitudinal. Le passage du premier mode de freinage de parcage au second mode de freinage de parcage est obtenu grâce à des moyens de dérivation du fluide du circuit de commande du système de freinage de parcage vers le circuit de commande du circuit de frein de service avant pour que le système de freinage de frein de service avant assure l'immobilisation du véhicule pendant que simultanément le système de frein de parcage soit désactivé.

Dans une forme de réalisation, les moyens de dérivation comprennent une double valve d'arrêt qui présente une entrée et une sortie connectées au circuit de commande du circuit de freinage avant et une entrée connectée au circuit de commande du système de freinage de parcage et qui présente un clapet obturant l'entrée qui se trouve à la pression la plus basse. L'interconnexion entre le circuit de commande du système de freinage de parcage et du circuit de commande de freinage avant est, ainsi, grâce à un composant standard et d'un fonctionnement fiable.

Selon une disposition de l'invention, un robinet de sécurité, positionné en amont de l'entrée de la double valve d'arrêt contrôle l'alimentation de la double valve d'arrêt par le circuit de commande du système de freinage de parcage et permet de faire passer le dispositif du premier mode de freinage de parcage au second mode de freinage de parcage. Cette disposition fait que le passage du premier mode de freinage de parcage vers le deuxième mode de freinage de parcage peut être subordonné à une action du conducteur ou de la conductrice qui agit sur le robinet de sécurité.

Dans une forme de réalisation, le système de freinage de parcage comprend une valve de parcage piloté par un robinet de parcage la valve de parcage pouvant être dans un état passant, lorsque le robinet de parcage est inactivé auquel cas les actionneurs de freinage de parcage sont inactivés ou pouvant être dans un état non passant, lorsque le robinet de parcage est activé, auquel cas les actionneurs de freinage de parcage sont activés, et le dispositif est alors configuré dans le premier mode de freinage de parcage ; le système de freinage de parcage comprend, en outre, un distributeur ayant une entrée, un orifice de pilotage relié à un robinet de parcage et une sortie reliée à l'entrée de la double valve d'arrêt via le robinet de sécurité et reliée à un orifice de pilotage de la valve de parcage, le distributeur pouvant être dans un état passant lorsque le robinet de parcage est activé, ou être dans un état non passant, lorsque le robinet de parcage est inactivé, le dispositif étant dans le premier mode de freinage de parcage lorsque le robinet de sécurité est fermé et étant dans le second mode de freinage de parcage lorsque le robinet de sécurité est ouvert et autorise l'alimentation de la double valve d'arrêt pour alimenter le circuit de commande avant et pilote la valve de parcage pour la rendre passante et mettre les actionneurs de freinage de parcage en position inactive.

Selon une disposition le circuit de freinage avant intègre un module électronique de contrôle de freinage avant piloté fluidique et/ou électriquement par le dispositif de commande.

Il peut être prévu que chaque actionneur de frein de parcage comprenne un élément élastique tel qu'un ressort qui sollicite ledit actionneur dans une position de freinage.

Il est prévu, par ailleurs, que le dispositif de freinage comprenne le dispositif comprend un système fluidique de freinage de service arrière pouvant agir sur des roues arrière du véhicule présentant un circuit de freinage arrière, agissant sur au moins un actionneur de freinage arrière, piloté par un circuit de commande arrière.

De préférence, le robinet de sécurité est commandé par un organe de sécurité qui est situé dans une cabine de pilotage de véhicule pour que le conducteur ou la conductrice puisse éventuellement agir.

### Brève description des figures

Pour sa bonne compréhension l'invention est décrite en référence au dessin ci annexé représentant, à titre d'exemple non limitatif, une forme de réalisation d'un dispositif de freinage selon celle-ci.
Figure 1 montre schématiquement un dispositif de freinage selon l'art antérieur
Figure 2 à 4 montrent schématiquement une forme de réalisation du dispositif de freinage selon l'invention dans plusieurs modes de fonctionnement.

### Description détaillée de l'invention

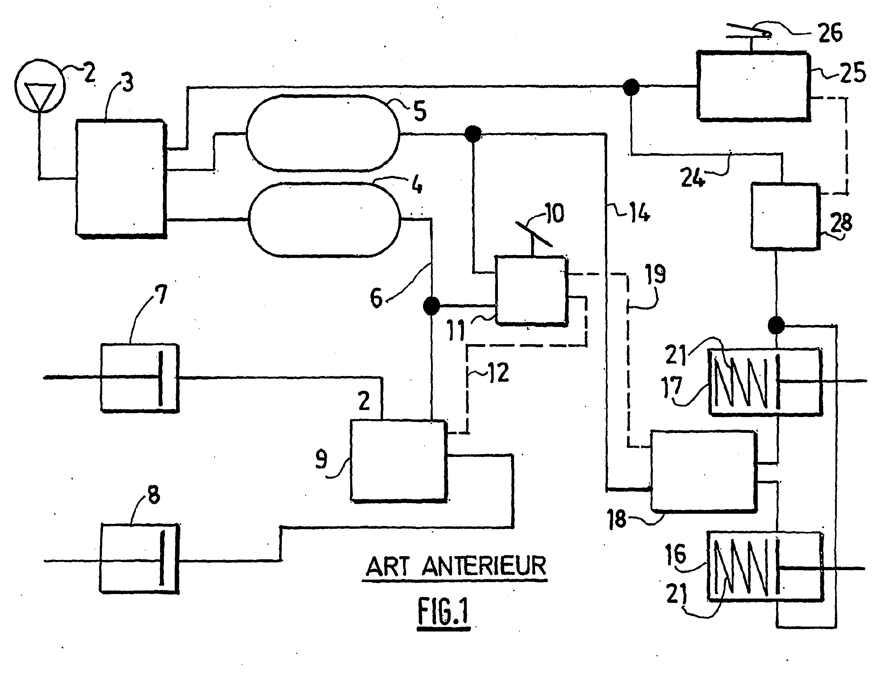

La figure 1 montre schématiquement l'architecture d'un dispositif de freinage pour un véhicule industriel selon l'art antérieur.

De façon générale, le freinage d'un véhicule industriel, par exemple un camion porteur d'une charge ou tracteur d'une charge, est assuré de manière pneumatique. A cet effet, comme on peut le voir sur la figure 1, il est prévu un compresseur d'air 2 qui alimente un distributeur d'air 3. Le distributeur d'air 3 a, comme fonction, de filtrer et réguler la pression de l'air provenant du compresseur d'air 2.

Le dispositif de freinage d'un véhicule comprend généralement deux systèmes de freinage de service avant et arrière et un système de freinage de parcage.

On va tout d'abord s'intéresser aux systèmes de freinage de service avant et arrière c'est-à-dire les systèmes qui permettent à un conducteur ou à une conductrice de diminuer ou d'annuler la vitesse d'un véhicule à moteur au cours de sa conduite. Chaque circuit de freinage comprend généralement un circuit de freinage qui fournit une puissance et un circuit de commande qui pilote ledit circuit de freinage.

En aval du distributeur d'air 3, on trouve deux réservoirs 4 et 5 qui alimentent respectivement un circuit de puissance pneumatique avant 6 destiné à fournir l'énergie de freinage au train roulant avant et un circuit de puissance pneumatique arrière 14 destiné à fournir l'énergie de freinage au train roulant arrière.

Par convention, sur les figures, chacun des circuits de puissance est représenté en traits continus.

Le circuit de freinage avant 6 est bien entendu raccordé à deux actionneurs de frein 7 et 8 qui convertissent l'énergie pneumatique en une action mécanique sur un moyen de freinage d'une roue, c'est-à-dire un disque ou un tambour selon les cas. Les moyens de freinage ne sont pas représentés sur les figures, en raison de leurs caractéristiques largement connues.

La pression pneumatique appliquée sur les actionneurs 7 et 8 est commandée par un module de contrôle électronique de contrôle de freinage, également connu par son sigle EBS, qui fixe la valeur de consigne à appliquer sur les actionneurs 7, 8 au cours d'un freinage.

Le freinage est déclenché par le conducteur ou la conductrice du véhicule qui appuie, généralement, avec son pied sur une pédale 10 d'un dispositif de commande 11.

En fonction de la course appliquée sur la pédale 10, un signal pneumatique est transmis au travers d'un circuit de commande 12 au module électronique de contrôle de freinage avant 9 pour fixer une valeur de consigne à appliquer aux deux actionneurs 7, 8 de freinage. Il doit être noté que le dispositif de commande 11 envoie également un signal électrique par une liaison filaire au module électronique de contrôle de freinage avant 9. Le pilotage du module électronique de contrôle de freinage avant 9 peut être à la fois électrique et pneumatique. La liaison électrique n'est pas représentée sur les figures.

Le circuit de commande avant 12, par convention, est représenté en traits discontinus et relie, donc, le dispositif de commande 11 au module électronique de contrôle de freinage avant 9. L'énergie pneumatique du circuit de commande est alimentée en air comprimé par le réservoir avant 4.

Le système de freinage arrière présente la même structure que celle du circuit de freinage avant. Le système de freinage arrière comprend un circuit pneumatique de freinage arrière 14 et un circuit pneumatique de commande arrière 19 représenté en traits discontinus.

Le circuit de freinage arrière 14 est relié à deux actionneurs arrière 16, 17 agissant sur des moyens de freinage des roues (non représentés sur les figures). Un module électronique de contrôle de freinage arrière 18 permet de contrôler la pression pneumatique appliquée aux deux actionneurs arrière 16, 17 agissant sur les moyens de freinage de chaque roue arrière.

Un circuit de commande arrière 19 relie le dispositif de commande au module électronique de contrôle de freinage arrière 18.

Le circuit de commande arrière 19 pilote, en fonction de la course appliquée sur la pédale 10 et, donc, sur le dispositif de commande 11, la valeur de consigne de la pression pneumatique à affecter à chaque actionneur 16, 17 arrière. De manière analogue au circuit de freinage avant, le dispositif de commande 11 envoie également un signal électrique par une liaison filaire au module électronique de contrôle de freinage arrière 18. Le pilotage du module électronique de contrôle de freinage arrière 18 est à la fois électrique et pneumatique.

De manière classique, un dispositif de freinage comprend également un système de frein .de parcage qui permet de maintenir mécaniquement le véhicule immobile, même sur sol incliné.

Comme on peut le voir sur la figure 1, chacun des actionneurs arrière 16 et 17 intègre un ressort portant respectivement les références 21 et 22. Le système de frein de parcage fonctionne selon un principe inverse de celui du système de frein de service. En effet lorsque le système de frein de parcage est inactif, chacune des ressorts 21 et 22 est comprimé par une action pneumatique. A cet effet comme on peut le voir sur la figure 1, un circuit de puissance de parcage 24 alimente en air comprimé chacun des actionneurs arrière 16 et 17. L'activation du système de parcage se fait par un robinet de parcage 25 qui est généralement commandé par un levier à main 26. Le robinet de parcage 25 pilote une valve de parcage 28 qui contrôle l'alimentation en fluide sous pression.

Lorsqu'un fluide sous pression est appliqué au travers de la valve de parcage 28 sur les ressorts 16 et 17, le système de freinage de parcage est inactif.

A l'opposé, lorsque, consécutivement à une action sur le levier 26, le robinet de parcage 25 pilote la valve de parcage 28 en vue de la fermer, les ressorts 16 et 17 ne sont plus retenus et peuvent venir agir sur les roues arrière du véhicule pour les bloquer.

On constate que lorsque le système de freinage de parcage est actif aucune action de freinage ne s'exerce sur les actionneurs avant 7 et 8 et les roues avant du véhicule sont libres.

Comme cela a été expliqué une conséquence du blocage des roues arrière lorsque le véhicule est en mode de parcage, est que l'ajustement en hauteur de la suspension arrière induit généralement un déplacement longitudinal du véhicule.

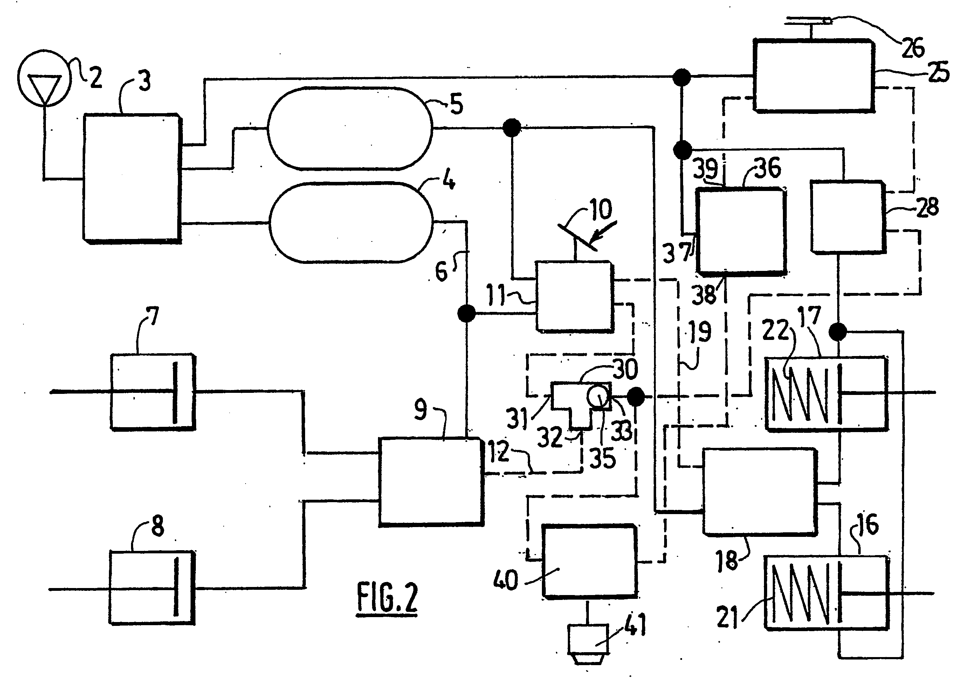

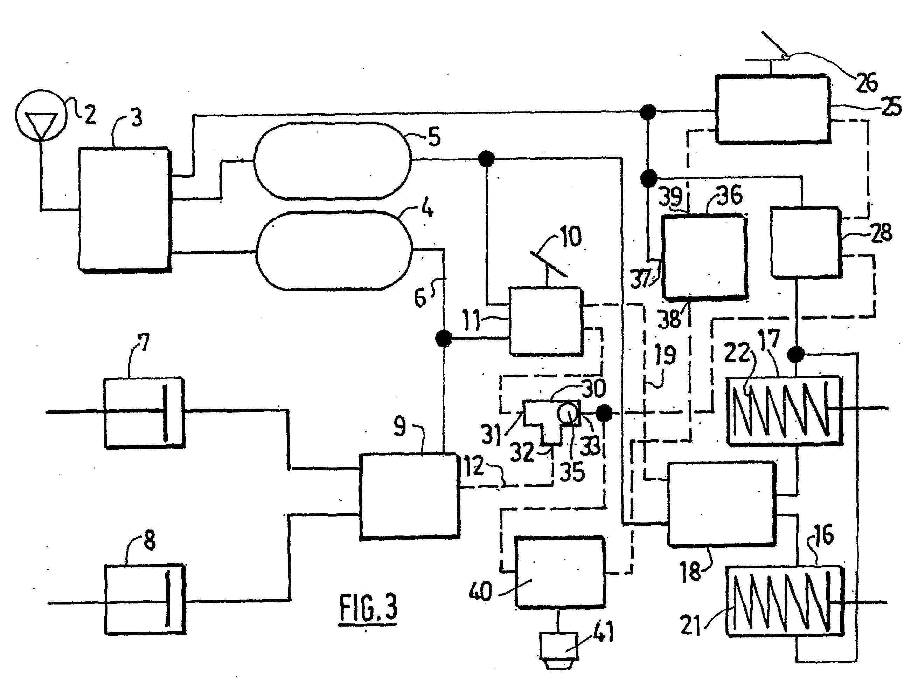

Le dispositif de freinage 1 montré dans deux modes de fonctionnement aux figures 2 et 3 permet de résoudre ce problème.

En prenant comme base le dispositif de figure 1, le dispositif de freinage 1 de la figure 2 prévoit d'interconnecter le système de freinage de parcage avec le circuit de commande 12 de façon à exercer une action de freinage sur les roues avant tout en suspendant le parcage des roues arrière.

Comme cela apparaît sur les figures 2 à 3, il est notamment prévu d'insérer une double valve d'arrêt 30 dans le circuit de commande 12 du circuit de freinage avant 6. La double valve d'arrêt 30 présente une entrée 31 reliée au dispositif de commande 11 et une sortie 32 reliée à l'orifice de pilotage pneumatique du module électronique de freinage avant 9 du circuit de freinage avant 6. La seconde entrée 33 de la double valve d'arrêt 30 est alimentée via un robinet 40 par un distributeur 36. La double valve d'arrêt 30 présente un clapet 35 qui obture l'entrée 31 ou 33 qui est à la pression la plus basse. Il est précisé que le distributeur 36 via un robinet 40 est relié à sa sortie à la double valve d'arrêt 30 et à un orifice de pilotage de la valve de parcage 28.

Le distributeur 36 présente une entrée 37, une sortie 38 et un orifice de pilotage qui est relié au robinet de parcage 25.

Le distributeur 36 est du type inverse c'est-à-dire le distributeur 36 est passant lorsqu'il n'est pas piloté. De façon plus précise le distributeur 36 fonctionne de la manière suivante :
- dans le cas où le robinet de parcage 25 du frein de stationnement est en position de désactivation - en d'autres termes le frein de parcage n'est pas sollicité - une pression d'air s'applique sur l'orifice de pilotage 39 du distributeur 36 et celui-ci n'est pas passant,
- dans le cas où le robinet de parcage 25 est en position d'activation - en d'autres termes le frein de parcage est sollicité - aucune pression d'air ne s'applique sur l'orifice de pilotage 39 du distributeur 36 et celui-ci est alors passant.

On précise que le robinet de sécurité 40 qui est interposé entre le distributeur 36 et la double valve d'arrêt 30 est passant lorsqu'une action est exercée sur un organe de commande qui peut être, par exemple, un bouton 41. Le bouton 41 peut, par exemple, placé dans la cabine de pilotage du véhicule.

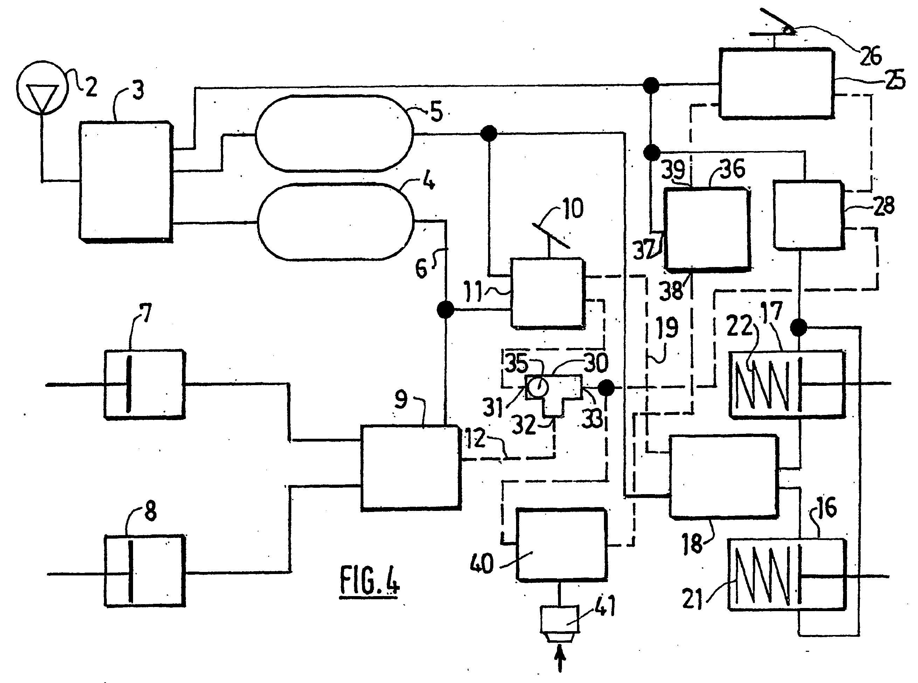

Le dispositif, ainsi défini, peut présenter plusieurs modes de fonctionnement qui sont illustrés respectivement par les figures 2 à 4.

En se referant tout d'abord à la figure 2, on peut voir que cette figure illustre un mode de fonctionnement dans lequel le système de frein de service est sollicité. Symboliquement, une flèche représente une action de freinage sur la pédale 10.

Les circuits de commande avant 12 et arrière 19 sont sollicités et transmettent un signal de consigne, en fonction de l'action exercée sur la pédale 10, respectivement au module électronique de contrôle de freinage avant 9 et au module électronique de contrôle de freinage arrière 18 qui, à leur tour, autorisent le passage de fluide sous pression en direction des actionneurs de freinage.

Une précision s'impose pour ce qui est du fonctionnement du circuit de commande 12 du circuit de freinage avant. Sous l'action du fluide sous pression en provenance du dispositif de commande 11 qui entre dans la double valve d'arrêt 30 par l'orifice 31, le clapet 35 est poussé contre l'entrée 33 de la double valve d'arrêt 30.

La figure 3 montre le dispositif selon l'invention lorsqu'il est sollicité pour que le véhicule soit en mode de freinage de parcage.

Dans ce cas de figure, une action est exercée sur le levier 26. Cette action est symbolisée par le fait que le levier 26 est relevé. Cette action se répercute sur le robinet 25 qui ordonne à la valve de parcage 28 de ne plus être passante, ce qui a pour effet de libérer les ressorts 21 et 22 et donc de placer le véhicule en mode de parcage.

Le robinet de parcage 25, comme on l'a vu, pilote également le distributeur 36 qui devient passant lorsque le robinet de parcage25 est en position de freinage de parcage. Par conséquent, le fluide sous pression passe par le distributeur 36 en direction de la double valve d'arrêt 30. Cependant, dans la mesure où le robinet de sécurité 40 n'est pas sollicité, le robinet de sécurité 40 n'est pas passant et aucune pression ne s'applique à l'entrée 33 de la double valve d'arrêt 30.

Si, maintenant, le conducteur ou la conductrice agit sur l'organe de commande 41 pour rendre passant le robinet de sécurité 40, il se produit un double effet puisque du fluide sous pression alimente l'entrée 33 de la double valve d'arrêt 30 et, puisque, du fluide sous pression alimente un orifice de pilotage de la valve de parcage 28.

Au niveau de la double valve d'arrêt 30, le clapet 35 est repoussé contre l'entrée 31 et du fluide sous pression alimente l'orifice de pilotage du module électronique de freinage avant 9. Ce dernier, qui reçoit un signal de commande, devient passant et les actionneurs de freinage avant 7 et 8 sont activés.

Au niveau de la valve de parcage 28, cette dernière qui reçoit un signal de pilotage devient passante et, par conséquent, du fluide sous pression vient agir sur les ressorts 21 et 22 pour les comprimer et, donc, pour cesser l'action de freinage des actionneurs 16 et 17.

Dans ce second mode de freinage de parcage qui est conditionné à l'action exercée sur le robinet de sécurité 40 , les roues arrière ne sont soumises à aucune action de freinage tandis que les roues avant sont elles soumises à une action de freinage qui assure l'immobilisation du véhicule.

## Revendications

1. Dispositif de freinage (1) notamment pour un véhicule industriel comprenant notamment
un système fluidique de freinage de service avant pour agir sur des roues avant du véhicules présentant un circuit de freinage avant (6) agissant sur au moins un actionneur de freinage avant (7,8), piloté par un circuit de commande (12) et
un système fluidique de freinage de parcage ayant un circuit de freinage de parcage agissant sur au moins un actionneur de freinage arrière de parcage (17, 16) piloté par un circuit de commande pouvant placer le véhicule dans une premier mode de parcage dans lequel des roues arrière du véhicule sont bloquées,
**caractérisé en ce que** le dispositif comprend des moyens de dérivation du fluide sous pression du circuit de commande du système de parcage vers circuit de commande (12) du circuit de freinage avant permettant de faire passer le véhicule du premier mode de freinage de parcage dans lequel les actionneurs de freinage arrière sont activés à un second mode de freinage de parcage dans lequel les actionneurs de freinage arrière sont désactivés et les actionneurs de freinage avant sont activés.

2. Dispositif de freinage (1) selon la revendication 1, **caractérisé en ce que** les moyens de dérivation comprennent une double valve d'arrêt (30) qui présente une entrée (31) et une sortie (32) connectées au circuit de commande (12) du circuit de freinage avant et une entrée (33) connectée au circuit de commande du système de freinage de parcage et qui présente un clapet (35) obturant l'entrée (31,32) qui se trouve à la pression la plus basse.

3. Dispositif de freinage (1) selon la revendication 2, **caractérisé en ce qu'**un robinet de sécurité (40), positionné en amont de l'entrée (33) de la double valve d'arrêt (30), contrôle l'alimentation de la double valve d'arrêt (30) par le circuit de commande du système de freinage de parcage et permet de faire passer le dispositif du premier mode de freinage de parcage au second mode de freinage de parcage.

4. Dispositif de freinage (1) selon la revendication 3, **caractérisé en ce que** le système de freinage de parcage comprend
- une valve de parcage (28) piloté par un robinet de parcage (25) la valve de parcage (28) pouvant être dans un état passant, lorsque le robinet de parcage (25) est inactivé auquel cas les actionneurs de freinage de parcage (17, 16) sont inactivés ou pouvant être dans un état non passant, lorsque le robinet de parcage (25) est activé, auquel cas les actionneurs de freinage de parcage sont activés, et le dispositif est alors configuré dans le premier mode de freinage de parcage, et comprend, en outre,
- un distributeur (36) ayant une entrée (37), un orifice de pilotage (39) relié à un robinet de parcage (25) et une sortie (38) reliée à l'entrée (33) de la double valve d'arrêt (30) via le robinet de sécurité (40) et reliée à un orifice de pilotage de la valve de parcage (28), le distributeur (36) pouvant être dans un état passant lorsque le robinet de parcage (25) est activé, ou être dans un état non passant, lorsque le robinet de parcage est inactivé, le dispositif étant dans le premier mode de freinage de parcage lorsque le robinet de sécurité est fermé et étant dans le second mode de freinage de parcage lorsque le robinet de sécurité est ouvert et autorise l'alimentation de la double valve d'arrêt (20) pour alimenter le circuit de commande avant (12) et pilote la valve de parcage (28) pour la rendre passante et mettre les actionneurs de freinage de parcage (16, 17) en position inactive.

5. Dispositif de freinage (1) selon l'une des revendications 1 à 4, **caractérisé en ce que** le circuit de freinage avant intègre un module électronique de contrôle de freinage avant (9) piloté fluidique et/ou électriquement par le dispositif de commande (11).

6. Dispositif de freinage (1) selon l'une des revendications 1 à 5, **caractérisé en ce que** chaque actionneur de frein de parcage comprend un élément élastique qui sollicite ledit actionneur dans une position de freinage.

7. Dispositif de freinage (1) selon l'une des revendications 1 à 6, **caractérisé en ce que** le dispositif comprend un système fluidique de freinage de service arrière pouvant agir sur des roues arrière du véhicule présentant un circuit de freinage arrière (14), agissant sur au moins un actionneur de freinage arrière, piloté par un circuit de commande arrière (19).

8. Dispositif de freinage (1) selon l'une des revendications 3 à 7, **caractérisé en ce que** le robinet de sécurité (40) est commandé par un organe de sécurité (41) qui est situé dans une cabine de pilotage de véhicule.

## Claims

1. Braking device (1), particularly for a commercial vehicle, notably comprising:
a fluidic front service braking system to act on front wheels of the vehicle, having a front braking circuit (6) acting on at least one front brake actuator (7, 8) driven by a control circuit (12), and
a fluidic parking braking system having a parking braking circuit acting on at least one rear parking brake actuator (17, 16) driven by a control circuit able to place the vehicle in a first parked mode in which rear wheels of the vehicle are immobilized,
**characterized in that** the device comprises means for diverting pressurized fluid from the parking system control circuit to the front braking circuit control circuit (12) to allow the vehicle to be switched from the first parked braking mode in which the rear brake actuators are activated into a second parked braking mode in which the rear brake actuators are deactivated and the front brake actuators are activated.

2. Braking device (1) according to Claim 1, **characterized in that** the diverting means comprise a double check valve (30) which has an inlet (31) and an outlet (32) which are connected to the front braking circuit control circuit (12) and an inlet (33) connected to the parking braking system control circuit and which has a shutter element (35) closing off the inlet (31, 32) that is at the lowest pressure.

3. Braking device (1) according to Claim 2, **characterized in that** a safety control valve (40), positioned upstream of the inlet (33) to the double check valve (30), controls the supply of fluid to the double check valve (30) from the parking braking system control circuit and allows the device to be switched from the first parked braking mode to the second parked braking mode.

4. Braking device (1) according to Claim 3, **characterized in that** the parking braking system comprises:
- a parking valve (28) controlled by a parking control valve (25), it being possible for the parking valve (28) to be in a fluid-transmitting state when the parking control valve (25) is deactivated, in which case the parking brake actuators (17, 16) are deactivated, or to be in a non-fluid transmitting state when the parking control valve (25) is activated, in which case the parking brake actuators are activated, and the device is then configured in the first parked braking mode, and further comprises:
- a directional control valve (36) having an inlet (37), a control orifice (39) connected to a parking control valve (25) and an outlet (38) connected to the inlet (33) of the double check valve (30) via the safety control valve (40) and connected to a control orifice of the parking valve (28), it being possible for the directional control valve (36) to be in a fluid-transmitting state when the parking control valve (25) is activated, or to be in a non-fluid transmitting state when the parking control valve is deactivated, the device being in the first parked braking mode when the safety control valve is closed and being in the second parked braking mode when the safety control valve is open and allows the double check valve (20) to be supplied with fluid to supply fluid to the front control circuit (12) and operates the parking valve (28) to make it transmit fluid and place the parking brake actuators (16, 17) in an inactive position.

5. Braking device (1) according to one of Claims 1 to 4, **characterized in that** the front braking circuit incorporates a front braking electronic control module (9) driven fluidically and/or electrically by the control device (11).

6. Braking device (1) according to one of Claims 1 to 5, **characterized in that** each parking brake actuator comprises an elastic element which urges the said actuator into a braking position.

7. Braking device (1) according to one of Claims 1 to 6, **characterized in that** the device comprises a fluidic rear service braking system able to act on the rear wheels of the vehicle and having a rear braking circuit (14) acting on at least one rear brake actuator driven by a rear control circuit (19).

8. Braking device (1) according to one of Claims 3 to 7, **characterized in that** the safety control valve (40) is controlled by a safety member (41) which is situated in a cab of the vehicle.

## Patentansprüche

1. Bremsvorrichtung (1), insbesondere für ein Nutzfahrzeug, mit insbesondere
- einem Fluidsystem für die vordere Betriebsbremse zum Einwirken auf die Vorderräder des Fahrzeugs, welches einen vorderen Bremskreis (6) aufweist, der auf wenigstens eine Betätigungseinrichtung für die Vorderbremse (7, 8) einwirkt, die durch einen Steuerkreis (12) gesteuert wird, und
- einem Fluidsystem für die Parkbremse mit einem Bremskreis für die Parkbremse, der auf wenigstens eine Betätigungseinrichtung für die hintere Parkbremse (17, 16) einwirkt, die von einem Steuerkreis gesteuert wird, welcher das Fahrzeug in einen ersten Parkmodus versetzen kann, in dem die Hinterräder des Fahrzeugs blockiert sind,
**dadurch gekennzeichnet, dass** die Vorrichtung Einrichtungen zum Abzweigen des mit Druck beaufschlagten Fluids vom Steuerkreis für das Parksystem zum Steuerkreis (12) für den vorderen Bremskreis umfasst, was einen Übergang des Fahrzeugs vom ersten Parkbremsenmodus, in dem die Betätigungseinrichtungen für die Hinterbremse aktiviert sind, in einen zweiten Parkbremsenmodus erlaubt, in dem die Betätigungseinrichtungen für die Hinterbremse deaktiviert und die Betätigungseinrichtungen für die Vorderbremse aktiviert sind.

2. Bremsvorrichtung (1) nach Anspruch 1, **dadurch gekennzeichnet, dass** die Abzweigeinrichtungen ein doppeltes Sperrventil (30) aufweisen, das einen Einlass (31) und einen Auslass (32), die mit dem Steuerkreis (12) des vorderen Bremskreises verbunden sind, und einen Einlass (33) aufweist, der mit dem Steuerkreis für das Parkbremsensystem verbunden ist und der eine Klappe (35) aufweist, die den Einlass (31, 32) verschließt, der sich auf dem niedrigsten Druck befindet.

3. Bremsvorrichtung (1) nach Anspruch 2, **dadurch gekennzeichnet, dass** ein stromauf von dem Einlass (33) des doppelten Sperrventils (30) positionierter Sicherheitshahn (40) die Versorgung des doppelten Sperrventils (30) durch den Steuerkreis des Parkbremsen-Systems steuert und den Übergang der Vorrichtung vom ersten Parkbremsenmodus in den zweiten Parkbremsenmodus erlaubt.

4. Bremsvorrichtung (1) nach Anspruch 3, **dadurch gekennzeichnet, dass** das Parkbremsensystem
- ein von einem Parkhahn (25) gesteuertes Parkventil (28), das in einem durchlässigen Zustand sein kann, wenn der Parkhahn (25) nicht aktiviert ist, wobei in diesem Fall die Betätigungseinrichtungen für die Parkbremse (17, 16) nicht aktiviert sind, oder das in einem nicht durchlässigen Zustand sein kann, wenn der Parkhahn (25) aktiviert ist, wobei in diesem Fall die Parkbremsenbetätigungseinrichtungen aktiviert sind und die Vorrichtung dann in dem ersten Parkbremsenmodus konfiguriert ist, und weiterhin
- einen Verteiler (36) aufweist, der einen Einlass (37), eine mit einem Parkhahn (25) verbundene Steuerungsöffnung (39) und einen Auslass (38) hat, der mit dem Einlass (33) des doppelten Sperrventils (30) über den Sicherheitshahn (40) und mit einer Steuerungsöffnung des Parkventils (28) verbunden ist, wobei der Verteiler (36) in einem durchlässigen Zustand sein kann, wenn der Parkhahn (25) aktiviert ist, oder in einem nicht durchlässigen Zustand sein kann, wenn der Parkhahn nicht aktiviert ist, wobei sich die Vorrichtung im ersten Parkbremsenmodus befindet, wenn der Sicherheitshahn geschlossen ist und in einem zweiten Parkbremsenmodus befindet, wenn der Sicherheitshahn geöffnet ist und die Versorgung des doppelten Sperrventils (20) zur Versorgung des vorderen Steuerkreises (12) erlaubt und das Parkventil (28) steuert, um es durchlässig zu machen und die Betätigungseinrichtungen für die Parkbremse (16, 17) in die inaktive Position zu versetzen.

5. Bremsvorrichtung (1) nach einem der Ansprüche 1 bis 4, **dadurch gekennzeichnet, dass** der vordere Bremskreis ein elektronisches Modul zur Steuerung der Vorderbremse (9) einschließt, das durch Fluid und/oder elektrisch durch die Steuervorrichtung (11) gesteuert wird.

6. Bremsvorrichtung (1) nach einem der Ansprüche 1 bis 5, **dadurch gekennzeichnet, dass** jede Parkbremsenbetätigungseinrichtung ein elastisches Element umfasst, das die Betätigungseinrichtung in eine Bremsposition belastet.

7. Bremsvorrichtung (1) nach einem der Ansprüche 1 bis 6, **dadurch gekennzeichnet, dass** die Vorrichtung ein Fluidsystem für die hintere Betriebsbremse aufweist, das auf die Hinterräder des Fahrzeugs einwirken kann und einen Hinterbremsenkreis (14) aufweist, der auf wenigstens eine Betätigungseinrichtung für die Hinterbremse wirkt, die von einem hinteren Steuerkreis (19) gesteuert wird.

8. Bremsvorrichtung (1) nach einem der Ansprüche 3 bis 7, **dadurch gekennzeichnet, dass** der Sicherheitshahn (40) durch eine Sicherheitseinrichtung (41) gesteuert wird, die sich in einer Fahrzeugsteuerkabine befindet.
